**Europäisches Patentamt**

**European Patent Office**

**Office européen des brevets**

(19)

(11) Publication number : **0 334 926 B1**

## (12) EUROPEAN PATENT SPECIFICATION

(45) Date of publication of patent specification :
**06.05.92 Bulletin 92/19**

(51) Int. Cl.⁵ : **F01N 3/02,** B01D 46/00, B01D 46/30, B01D 46/12

(21) Application number : **88908315.0**

(22) Date of filing : **23.09.88**

(86) International application number :
**PCT/IT88/00066**

(87) International publication number :
**WO 89/02977 06.04.89 Gazette 89/08**

(54) **FILTER FOR THE ABATEMENT OF SOLID PARTICLES AND UNBURNED HYDROCARBONS ENTRAINED IN THE EXHAUST GASES FROM INTERNAL COMBUSTIONENGINES.**

(30) Priority : **02.10.87 IT 4844287**

(43) Date of publication of application :
**04.10.89 Bulletin 89/40**

(45) Publication of the grant of the patent :
**06.05.92 Bulletin 92/19**

(84) Designated Contracting States :
**AT BE CH DE FR GB LI LU NL SE**

(73) Proprietor : **LONGOBARDI, Roberto**
**Viale Europa, 2/E**
**I-80053 Castellammare di Stabia (Napoli) (IT)**
Proprietor : **LONGOBARDI, Raffaele**
**Viale Europa, 2/E**
**I-80053 Castellammare di Stabia (Napoli) (IT)**

(72) Inventor : **LONGOBARDI, Roberto**
**Viale Europa, 2/E**
**I-80053 Castellammare di Stabia (Napoli) (IT)**
Inventor : **LONGOBARDI, Raffaele**
**Viale Europa, 2/E**
**I-80053 Castellammare di Stabia (Napoli) (IT)**

(74) Representative : **Lanzoni, Luciano**
**c/o Bugnion S.p.A. Piazza dei Re di Roma, 21**
**I-00183 Roma (IT)**

EP 0 334 926 B1

## Description

The invention relates to a filter for the abatement essentially of solid particles and unburned hydrocarbons entrained in the exhaust gases from internal combustion engines, whether used for the propulsion of motor vehicles or as prime movers in permanently installed domestic, community or industrial power transmission systems, and whether fuelled by petrol or diesel.

For some time now, researchers have been concerned with the problem of environmental pollution caused by emissions in the exhaust from internal combustion engines, their aim being to find ways of reducing the quantity of polluting and toxic post-combustion substances released into the atmosphere from engines fuelled both by petrol carburation (Otto cycle) and by injection and compression (diesel).

The polluting agents in question are identifiable in the main as carbon dioxide, hydrocarbons that have escaped combustion, oxides of nitrogen, sulphur and lead, and entrained solid matter or fuel ash, which will be present in proportions that vary according to the different types of engine, and attributable for the most part to less-than-perfect mingling of the air-and-fuel mixture, and incomplete combustion. Attempts to curb pollution have been made thus far in two main directions. On the one hand, research. has been concentrated on improving and modifying the carburation, injection and mixing of engine fuels, experimenting with the shape of combustion chambers, valves and passages, and optimizing the combustion cycle; on the other, researchers have recognized the extreme difficulty of creating ideal conditions for combustion and maintaining them constant in the long term, and in the various operating and environmental situations encountered. Accordingly, efforts have also been made to find ways and means, remote from the engine, of reducing emissions to as great an extent as possible.

To this end, thermal reactors have been designed that induce reheat by injecting further fuel and air at suitable temperature; a chemical type of reheat has also been produced by the adoption of catalytic silencers, although these silencers have proven to be effective only against the oxides of carbon and nitrogen and unburned hydrocarbons, whereas rapid deterioration occurs through poisoning of the noble catalyst metal by lead oxides and entrained matter. Diesel engines, in particular, produce exhaust gases in which the concentration of entrained particles is much higher than that of the oxides of nitrogen, and as catalytic silencers cannot be utilized in such a situation, remedies must be sought in improvement of the combustion cycle and regular servicing of the engine.

Finally, attempts have been made to fit a variety of types of filter to the tail-pipe, e.g. wire mesh, fabric, foam, dry or oil-bath etc... Such expedients have proved totally unsuitable however, by reason of the rapid rate at which blockage occurs; a blocked filter occasions back-pressure through the exhaust system, and as a result, significant loss of engine output and further deterioration of the combustion cycle.

In a move aimed at remedying blockage problems, i.e. at eliminating the back-pressure that occurs through exhaust systems due to the blockage of conventional exhaust filters, the present inventors have designed and built an exhaust system incorporating a device, able to house one or more filter elements, that can be opened up and inspected to permit of servicing the elements when blocked or due for replacement; the filtration device in question is also designed to guarantee a steady flow of the exhausting gases, and to ensure that no loss of engine output will occur as a result of filters becoming blocked.

The exhaust system and the device for housing the filter elements constitute the subject matter of a separate application filed by the same applicant.

With the development of this new method of utilizing exhaust filters for internal combustion engines, the marked inefficiency and high cost of conventional filters have become significantly apparent; not only are the offending pollutants subjected to an action that is both incomplete and selective, but also, the useful life of the filter tends to be singularly short. In essence, conventional filters, as for exemple the filters disclosed in the patents DE-A-1,476,627 and US-4,416,674, manage at best to trap a certain quantity of the larger solid particles entrained, and if fitted, say, to a poorly serviced diesel engine, will either show signs of blockage after just a few hours operation, and/or deteriorate as a result of the high temperatures to which they become subject. Whilst it is true that larger and more expensive filters have been designed to ensure efficient operation, these are suitable only for large engines in industrial applications. Naturally enough, it is unrealistic to think in terms of designing a filter capable of eliminating or trapping all of the polluting agents entrained or dissolved in exhaust gases; instead, research must be directed toward the development of filters that will produce a highly efficient and lasting effect on the more troublesome and toxic agents, whilst the means of controlling the remaining emissions must be sought in improvements to the combustion cycle and regular servicing of the engine.

Accordingly, the object of the present invention is to design an exhaust filter capable, in particular, of trapping as great a quantity as possible of solid particles and unburned hydrocarbons, given that these emissions are the most highly toxic, and are the ones providing a ready indication of the smoke content in exhaust gases.

A further object of the invention is to embody a filter of considerable durability and efficiency, resistant to high exhaust temperatures, that will be suitable for installation at any given point along the exhaust system downline of the exhaust manifold. Another object of the invention is to provide an efficient, low cost filter suitable for use with any given internal combustion engine, petrol and diesel-fuelled alike, whether fitted to motor vehicles or used in driving domestic, civil or industrial power transmission systems.

An additional object of the invention is to embody a filter that is able, if no: actually to eliminate emissions other than solids and hydrocarbons, then at least to prevent their continued formation in the exhaust system.

Not least among the objects of the invention is that of ensuring a given minimum filtration even when the filter is approaching the end of its useful life, thereby avoiding back-pressure through the exhaust system and loss of output from the engine. The stated objects, and others besides, are realized by adoption of an exhaust filter characterized in that it comprises a plurality of distinct stages including:

     – at least two filtration stages located one at either end of the filter, each of which consisting in a filling of highly permeable\metal material;
     – a filtration stage consisting in a filling of clay based refractory material;
     – at least one stage consisting in an empty chamber located between two successive filtration stages;

in that the individual stages are compassed between and separated one from the next by rigid perforated plates, arranged in succession and accommodated internally of a hollow casing by which they are also retained and supported; and

in that the two opposite ends of the casing coincide with the inlet and outlet surfaces through which exhaust gases enter the initial filtration stage and leave the final filtration stage, respectively.

The invention will now be described in detail, by way of example, with the aid of the accompanying drawings, in which:

     – fig 1 is the longitudinal section through a filter according to the invention;
     – fig 2 is a perspective of the filter illustrated in fig 1, viewed in cutaway.

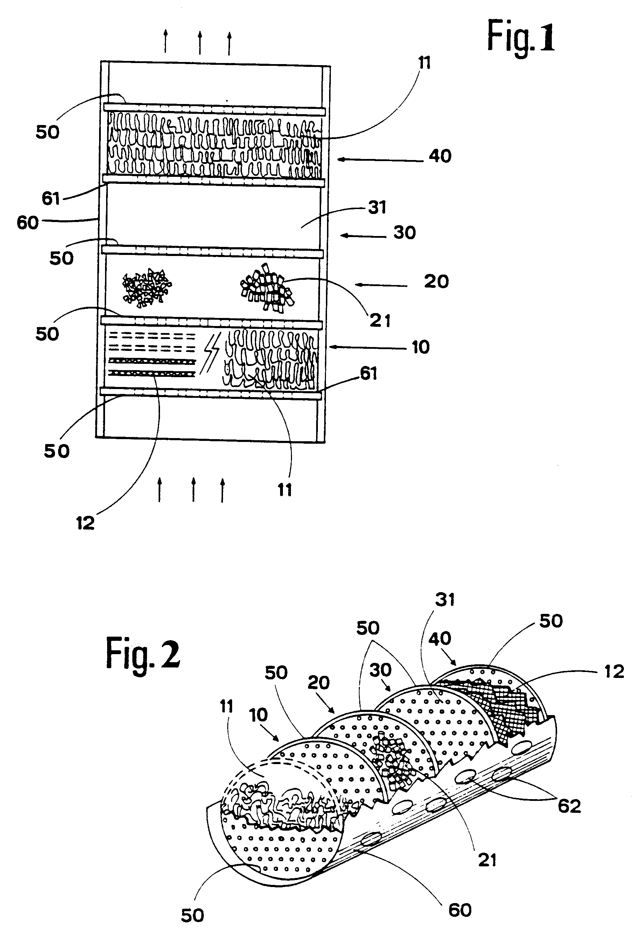

Referring to the drawings, fig 1 shows one example of how a filter according to the invention might be embodied with a succession of four stages disposed transversely to the flow of the exhausting gases, which is indicated by the arrows. 10 denotes a first filtration stage consisting in a filling of steel wool 11, or alternatively, a plurality of layers of fine gauge wire mesh 12; in either case, the filling will be highly permeable.

20 denotes a filtration stage that consists in a filling of clay based refractory material 21. 30 denotes a stage consisting in an empty space. 40 denotes a final filtration stage, consisting in a filling of steel wool 11 identical to the first stage 10, from which the gases ultimately emerge; likewise in this instance, the steel wool can be replaced by layers of fine gauge mesh 12 (e.g. as in fig 2).

The various stages 10, 20, 30 and 40 are compassed between and separated by rigid perforated plates 50 fashioned preferably from sheet metal, as in fig 2. The succession of stages and the rigid plates 50 between them are retained and supported by a hollow casing 60, preferably of cylindrical shape; in the example illustrated, the plates 50 locate in annular grooves 61 afforded by the casing 60, though any similar arrangement might be adopted.

In a preferred embodiment of the invention, the clay based refractory material of the filtration stage denoted 20 will be an alumina; in the example of the drawings, the filling 21 appears as a plurality of regularly or irregularly shaped granules (fig 1), randomly compacted, though the option exists of utilizing one or more flat tablets of such material possessing suitable porosity (not illustrated for simplicity's sake), for example, sandwiched together and set transversely in the path of the exhausting gases. At all events, the clay refractory material will possess optimum heat resistance in respect of the hot exhaust gases, together with high adsorption properties, natural porosity such as will ensure a generous adsorbent surface area, and high resistance to chemical attack; also, the alumina content of the refractory material, which varies in concentration from one clay to another, enhances the porosity and adsorption characteristics of the relative stage 20. From practical tests effected with the filter, the refractory material has proved effective in trapping fuel ash and other solid particles, and unburned hydrocarbons too, especially those of high molecular weight.

The stage 30, or rather the empty space, following the refractory, is incorporated for the purpose of allowing rapid expansion of the gases; more exactly, the velocity of the gases is reduced significantly in passing through the pores and/or crevices in the clay material 21, and their expansion at this point will encourage sedimentation of the entrained solid particles of greatest volume and molecular weight that have managed to pass unfiltered through the previous stages. In a preferred embodiment of the filter, two of these sedimentation stages 30 could be incorporated to advantage by locating an empty chamber 31 immediately before and immediately after the refractory stage 20.

The initial and final stages 10 and 40 in steel wool 11 or mesh 12 serve to effect a moderate degree of filtration, and equally important, to reduce the velocity of the gases and favour their entry into and passage through the filter, thereby avoiding the negative effects of turbulence that would otherwise be set up at the inlet and outlet points.

With an exhaust filter thus embodied, one achieves the additional result of bringing about a notable cooling action on the gases, and indirectly, of reducing or almost totally preventing the continued formation of carbon and nitrogen oxides.

The filtration obtainable according to the invention is efficient and long-lasting by virtue of the fact that total blockage of the filter never occurs, and a given minimum passage of the exhaust gas is always ensured. Accordingly, a preferred embodiment of the filter will be provided with holes 62 located in the casing 60, not necessarily over the entire surface, but limited perhaps to strategic areas, which will enable the gases to escape sideways in the event of there being an obstruction or an insufficiently free passage internally of the filter.

The filter disclosed can be installed at any given point along the exhaust system, accommodated in a serviceable housing device that affords access for routine inspection and replacement operations; the option also exists of installation at the tail-pipe itself, and in this instance, the casing 60 will be suitably profiled, or designed for fitment by way of suitable means of retention and support.

## Claims

1. A filter for the abatement essentially of solid particles and unburned hydrocarbons entrained in the exhaust gases from internal combustion engines characterized
in that it comprises a plurality of distinct stages including:
 – at least two filtration stages (10, 40) located one at either end of the filter, each of which consisting in a filling of highly permeable metal material;
 – a filtration stage (20) consisting in a filling of clay based refractory material (21);
 – at least one stage (30) consisting in an empty chamber (31) located between two successive filtration stages;
in that the individual stages are compassed between and separated one from the next by rigid perforated plates (50), arranged in succession and accommodated internally of a hollow casing (60) by which they are also retained and supported; and
in that the two opposite ends of the casing coincide with the inlet and outlet surfaces through which exhaust gases enter the initial filtration stage and leave the final filtration stage, respectively.

2. A filter as in claim 1, comprising one stage (30) that consists in an empty chamber (31), located following the filtration stage (20) filled with refractory material (21) and preceding the endmost filtration stage (40) filled with metal material, considered in relation to the flow of the exhausting gases.

3. A filter as in claim 1, comprising two stages (30), each consisting in an empty chamber (31), located one immediately following and one immediately preceding the filtration stage (20) filled with refractory material (21), considered in relation to the flow of the exhausting gases.

4. A filter as in claim 1, wherein the filling of metal material consists in a plurality of layers of fine gauge mesh (12) sandwiched together and disposed transversely to the flow of the exhausting gases.

5. A filter as in claim 1, wherein the filling of metal material consists in steel wool (11).

6. A filter as in claim 1, wherein the filling of clay based refractory material (21) is an alumina.

7. A filter as in claim 1, wherein the filling of clay based refractory material (21) consists in a randomly compacted plurality of regularly or irregularly shaped granular bodies.

8. A filter as in claim 1, wherein the filling of clay based refractory material (21) consists in one or more flat tablets of suitable porosity sandwiched together and disposed transversely to the flow of the exhausting gases.

9. A filter as in claim 1, wherein the rigid perforated plates (50) are fashioned from sheet metal.

10. A filter as in claim 1, wherein the casing (60) is of hollow cylindrical shape.

11. A filter as in claim 1, wherein at least a part of the surface of the casing (60) is provided with holes (62).

## Patentansprüche

1. Filter zur Verminderung von im wesentlichen festen Partikeln und unverbrannten Kohlenwasserstoffen, mitgenommen von den Auspuffgasen von Innenverbrennungsmotoren,
**dadurch gekennzeichnet,**
dass er eine Anzahl von unterschiedlichen Abschnitten umfasst, die wie folgt enthalten:
 – wenigstens zwei Filterabschnitte, (10, 40), von denen an jedem Ende des Filters einer angeordnet ist, und die jeder aus einer Füllung von hochdurchlässigem Metallmaterial bestehen;
 – einen Filterabschnitt (20), bestehend aus einer Füllung von auf Ton basierendem feuerfesten Material;
 – wenigstens einen Filterabschnitt (30), bestehend aus einer leeren Kammer (31), die zwischen zwei aufeinanfolgenden Filterabschnitten angeordnet ist;
**dadurch,** dass die einzelnen Abschnitte zwischen starren perforierten Platten (50) liegen und durch diese voneinander getrennt sind, letztere aufeinanderfolgend und im Inneren eines hohlen Gehäuses (60) angeordnet, durch welches sie gehalten une getragen werden; und
**dadurch,** dass die beiden sich gegenüberliegenden Enden des Gehäuses mit den Eintritts- und Austrittsflächen übereinstimmen, durch welche die Auspuffgase jeweils in den ersten Filterabschnitt eintreten und aus dem letzten Filterabschnitt austreten.

2. Filter nach Patentanspruch 1, **dadurch gekennzeichnet,** dass er einen Abschnitt (30) enthält, der aus einer leeren Kammer (31) besteht, die im Anschluss an den mit feuerfestem Material (21) gefüllten Filterabschnitt (20) angeordnet ist und dem letzten, mit Metallmaterial gefüllten Filterabschnitt (40) vorangeht, und zwar im Verhältnis zu der Strömung der Auspuffgase gesehen.

3. Filter nach Patentanspruch 1, **dadurch gekennzeichnet**, dass er zwei Abschnitte (30) enthält, die jeder aus einer leeren Kammer (31) bestehen, und von denen einer unmittelbar im Anschluss an den mit feuerfestem Material (21) gefüllten Filterabschnitt (20) angeordnet ist und einer unmittelbar vor demselben, betrachtet im Verhältnis zu der Strömung der Auspuffgase.

4. Filter nach Patentanspruch 1, **dadurch gekennzeichnet,** dass die Füllung aus Metalmaterial aus einer Anzahl von Lagen aus feinmaschigem Netz (12) bestehen, die zusammengepackt und quer zu der Strömung der Auspuffgase angeordnet sind.

5. Filter nach Patentanspruch 1, **dadurch gekennzeichnet,** dass die Füllung aus Metallmaterial aus Stahlwolle (11) besteht.

6. Filter nach Patentanspruch 1, **dadurch gekennzeichnet,** dass die auf Ton basierende Füllung aus feuerfestem Material (21) eine Tonerde ist.

7. Filter nach Patentanspruch 1, **dadurch gekennzeichnet,** dass die auf Ton basierende Füllung aus feuerfestem Material (21) aus einer wahllos verdichteten Anzahl von gleichmässig oder ungleichmässig geformten Granulatkörpern besteht.

8. Filter nach Patentanspruch 1, **dadurch gekennzeichnet,** dass die auf Ton basierende Füllung aus feuerfestem Material (21) aus einer oder mehreren zusammengepackten Tafeln von geeigneter Porosität besteht, die quer zu der Strömung der Auspuffgase angeordnet sind.

9. Filter nach Patentanspruch 1, **dadurch gekennzeichnet,** dass die starren perforierten Platten (50) aus Blechplatten geformt sind.

10. Filter nach Patentanspruch 1, **dadurch gekennzeichnet,** dass das Gehäuse (60) von einer hohlen zylindrischen Form ist.

11. Filter nach Patentanspruch 1, **dadurch gekennzeichnet,** dass wenigstens ein Teil der Oberfläche des Gehäuses (60) mit Bohrungen (62) versehen ist.

## Revendications

1. Filtre servant essentiellement à réduire les particules solides et les hydrocarbures non brûlés entraînés par les gaz d'échappement dans les moteurs à combustion interne,

caractérisé
en ce qu'il comporte une pluralité d'étages distincts, comprenant:
– au moins deux étages de filtration (10, 40), situés aux deux extrémités du filtre, chacun desquels consiste en un chargement de matériau métallique ayant un haut degré de perméabilité;
– un étage de filtration (20) consistant en un chargement de matériau réfractaire à base d'argile (21);
– au moins un étage (30) consistant en une chambre vide (31) situé entre deux étages de filtration en succession;
en ce que les étages individuels sont séparés l'un de l'autre par des plaques (50) rigides perforées qui les renferment, ces plaques étant disposées en succession et logées à l'intérieur d'une enveloppe creuse (60) par laquelle elles sont également retenues et supportées; et
en ce que les deux extrémités opposées de l'enveloppe coïncident avec les surfaces d'entrée et de sortie à travers lesquelles les gaz d'échappement entrent dans l'étage initial de filtration et respectivement sortent de l'étage final de filtration.

2. Filtre selon la revendication 1, comprenant un étage (30) consistant en une chambre vide (31) située à la suite de l'étage de filtration (20) comportant le chargement de matériau réfractaire (21) et avant l'étage de filtration extrême (40) comportant le chargement de matériau métallique, la disposition étant considérée par rapport à l'écoulement des gaz d'échappement.

3. Filtre selon la revendication 1, comprenant deux étages (30), chacun desquels consiste en une chambre vide (31), situés respectivement immédiatement après et immédiatement avant l'étage di filtration (20) comportant le chargement de matériau réfractaire (21), la disposition étant considérée par rapport à l'écoulement des gaz d'échappement.

4. Filtre selon la revendication 1, caractérisé en ce que le chargement de matériau métallique consiste en une pluralité de couches de mailles de jauge fine (12) préssées ensemble et disposées transversalement à l'écoulement des gaz d'échappement.

5. Filtre selon la revendication 1, caractérisé en ce que le chargement de matériau métallique consiste en laine d'acier (11).

6. Filtre selon la revendication 1, caractérisé en ce que le chargement de matériau réfractaire à base d'argile comporte de l'alumine.

7. Filtre selon la revendication 1, caractérisé en ce que le chargement de matériau (21) réfractaire à base d'argile consiste en une pluralité compactée au hasard de corps granulaires de forme régulière et irrégulière.

8. Filtre selon la revendication 1, caractérisé en ce que le chargement de matériau (21) réfractaire à base d'argile consiste en un ou plusieurs comprimés plats de porosité convenable superposés et disposés transversalement à l'écoulement des gaz d'échappement.

9. Filtre selon la revendication 1, caractérisé en ce que les plaques rigides perforées (50) sont façonnées à partir d'une feuille métallique.

10. Filtre selon la revendication 1, caractérisé en ce que l'enveloppe (60) est de forme cylindrique creuse.

11. Filtre selon la revendication 1, caractérisé en ce qu'au moins une partie de la surface de l'enveloppe (60) est pourvue de trous (62).

# Fig.1

50

11

61

60

50

50

50

50

40

31

30

20

21

10

61

12

11

# Fig. 2

31

50

50

40

50

12

11

10

50

20

30

62

21

50

60